# EUROPEAN PATENT SPECIFICATION

(11) **EP 3 024 626 B1**
(45) Date of publication and mention of the grant of the patent: **29.11.2017**
(21) Application number: 14777787.4
(22) Date of filing: 22.07.2014
(51) Int. Cl.: B27N 3/02, B27N 3/04, B29C 43/00

(54) **METHOD AND SYSTEM FOR MAKING A MULTI-PURPOSE PANEL FROM COMPOSITE MATERIAL**
VERFAHREN UND ANORDNUNG ZUR HERSTELLUNG EINES MEHRZWECKPANELS AUS VERBUNDWERKSTOFF
PROCÉDÉ ET SYSTÈME DE FABRICATION D'UN PANNEAU MULTIFONCTIONNEL EN MATÉRIAU COMPOSITE

(30) Priority: 22.07.2013 IT RN20130029
(43) Date of publication of application: 01.06.2016
(73) Proprietor: Birnbaum, Richard, 67069 Ludwigshafen (DE)
(72) Inventor: Birnbaum, Richard, 67069 Ludwigshafen (DE)
(74) Representative: Zermani, Umberto
(86) International application number: PCT/IB2014/063301
(87) International publication number: WO 2015/011640

(56) References cited:
- CA-C- 2 026 470
- DE-B3-102006 005 369
- US-A- 4 514 255
- US-B1- 6 576 172
- DATABASE WPI Week 199925 Thomson Scientific, London, GB; AN 1999-290841 XP002726073, -& JP H11 92204 A (HONDA MOTOR CO LTD) 6 April 1999 (1999-04-06)

## Description

### Technical field

This invention relates to a method and a system for making a multi-purpose panel from composite material.

This invention relates, generally speaking, to the production of artificial composite multi-purpose materials, aimed at the manufacture of products having a structural strength and designed to replace, for example, wood or its by-products as the material for making these products. More specifically, the invention relates to a method and to a system for preparing the material and/or the products.

### Background art

Some types of industries use, as is known, construction materials derived from wood, that is, made from wood chippings, chips or fibres, which, with or without the use of binders, are processed to provide semi-finished or finished products in the form of panels, boards and strips of various shapes and sizes. These semi-finished products have numerous applications: for example, to make floorings or to manufacture decorative panelling; or they may be used as woodworking coverings or form themselves some basic components for manufacturing furniture.

The panels made from wood chippings are obtained by means of processes and relative production systems which perform the hot pressing of the wood chippings and semi-liquid resins, which are binders with which the chippings been previously coated. The resins are obtained, irrespective of the material from which the panels are made, by mixing various adhesive substances (for example: urea, cement, formaldehyde) which are suitably combined and dosed with each other.

The wooden material used in this technology, which in the past came from selected wood chippings, and thus had a clearly determined nature and characteristics, currently consists more and more of waste material, of various origins and quality. It is therefore quite common nowadays that the material contains elements which are foreign to the wood, such as metal parts and plastic parts, which become incorporated in the panel itself.

The mixing of materials with different characteristics and the indispensable need to agglomerate them into a monolithic product has resulted in the need to use special mixes of adhesives and has required, with respect to the adhesives, a growing increase in their ratio by weight relative to the weight of the wooden mass contained.

As a result of the gradual reduction in the availability of good quality wood, the panels, which have been produced over the years, have therefore gradually become increasingly heterogeneous, with the use of increasing amounts of waste materials and they have become increasingly heavy. This results in disadvantageous consequences for their handling and transport. In addition, there has also been a degrading in their workability, which is felt particularly in the cutting and drilling operations which are the most common and recurrent operations in the manufacture of furniture. Both the chipboard panels of traditional manufacturing and those obtained more recently with the inclusion of waste wood material have a porous honeycomb structure. Consequently, these panels suffer from the generalised limitation of not being waterproof, tending to absorb moisture and swell in the presence of water. Also, these panels do not have fire retardant properties.

Consequently, where these characteristics are rendered indispensable as a result of the intended use of the product made with the panels, or, alternatively, are desirable or recommended for safety reasons, the conventional panels are subjected, depending on the circumstances, to particular and specific treatments designed to occlude the natural porosity of the panel by depositing suitable occlusive and/or protective materials, and/or materials designed to inhibit their combustion capacity.

These treatments are performed by means of costly and special systems and apparatus and therefore have a significant influence on the final cost of the panel and/or the products which use the panels.

A different solution to the above-mentioned problems - published in patent document WO0025998 - uses, instead of wood chippings, finely ground straw designed to form a fine flour which is mixed with the liquid resin, so as to form an overall semi-fluid mass, which is then compressed and solidified hot with the aid of special and very complex and costly production systems. US-A-4 514 255 discloses a method for making a panel from composite material, comprising the steps of preparing, mixing and pressing at least one first and at least one second material. Other prior art solutions in the field relate to methods for making panels in which the adhesive resin is reduced to a powdery state (dry) and combined with the incoherent material inside a mould, in which they are pressed (and heated) for making a monolithic panel.

Disadvantageously, however, this solution has some drawbacks related with the difficulty of achieving a good cohesion between the particles in a short time, with considerable drawbacks in terms of productivity and, therefore, indirectly, production costs.

### Disclosure of the invention

The aim of this invention is therefore to overcome these problems, by devising a method and the design of a production system for this material which implies a further reduction in the production costs and, at the same time, an improvement in the production speed of the panel.

This aim is achieved by a method and a system for making a multi-purpose panel from composite material having the features described in appended claims 1,9. Preferred embodiments of the invention are defined in the depended claims. More specifically, the method according to this invention comprises the step of preparing at least one first particulate material to the solid state comprising a resin powder; - preparing at least one second particulate material in the solid state;
- mixing the at least one first and at least one second material to obtain a mixture;
- introducing the mixture in the solid state into a casting cavity;
- subjecting the mixture to a mechanical compression action at a pressure of between 400 MPa and 800 MPa and to a heating action at a temperature of between 200°C and 350°C in such a way as to determine a thermal-mechanical sintering between the first and the second material and
- cooling the mixture to obtain a multi-purpose panel wherein the first and the second material are aggregated monolithically together.

More specifically, the method according to this invention makes it possible to obtain the panel particularly quickly thanks to the use of catalysing means (or agents).

In a first embodiment, wherein the resin powder comprises at least one urea resin-based particulate material, the method comprises a step of drying the second material such as to determine in the second material a humidity of between 8% and 18%, preferably between 8% and 15%. Advantageously, during the sintering step, this humidity level acts as a means for catalysing the sintering between the first and the second material.

Alternatively, the resin powder may comprise a particulate substance containing isocyanate and polyol, wherein the isocyanate acts as a binder resin for the second substance and the polyol acts as a catalyst for the sintering.

Advantageously, by using the method described above, it is possible to obtain a very high quality multi-purpose panel in a very fast and inexpensive manner.

This invention also relates to a system for making the multi-purpose panel, a system which is able to implement the method described above.

The system comprises a first station for storing a first particulate material in the solid state comprising a resin powder, and a second station for storing a second particulate material in the solid state.

Moreover, operatively downstream of the storage stations, the system comprises a station for mixing the first and the second material suitable for making a mixture and a station for sintering, which is operatively located downstream of the mixing station and configured to make the multi-purpose panel.

According to this invention, the sintering station is equipped with:
- means for containing a predetermined quantity of the mixture which can be positioned in at least one pressing zone;
- heating means designed for raising the temperature of the pressing zone in a range of between 200°C and 350°C;
- pressing means designed for exerting on the mixture (in the pressing zone) a mechanical pressure of between 400 MPa and 800 MPa. Advantageously, in this way it is possible to obtain a very high quality multi-purpose panel in a sufficiently fast and inexpensive manner.
Downstream of the sintering station there is also an unloading station and a cooling station wherein the panel is kept for a predetermined period of time to reduce the relative temperature.

Preferably, the system comprises a unit for filling the containment means of the sintering station.

Thus, the filling unit is operatively interposed between the mixing station and the sintering station.

The unit comprises at least one duct passed through by the mixture and leading to a carriage which is movable between at least three positions:
- a first position, for filling, wherein it faces the duct for receiving the mixture;
- a second position, for moulding, wherein it is in the pressing zone;
- a third position, for unloading, away from the pressing zone and close to the unloading station.

Preferably, the filling unit comprises a plurality of carriages positioned in series and movable cyclically between the first, the second and the third position so as to maximise the productivity of the system.

In the preferred embodiment, the unit comprises two ducts leading from opposite sides of the sintering station, in particular of the pressing zone, and a plurality of carriages, positioned at both the ducts and movable alternately inside the pressing zone in such a way as to maximise the productivity of the system.

### Brief description of drawings

The technical features of the invention, with reference to the above aims, are clearly described in the annexed claims and its advantages are more apparent from the detailed description which follows, with reference to the accompanying drawings which illustrate a preferred, non-limiting embodiment of the invention and in which:

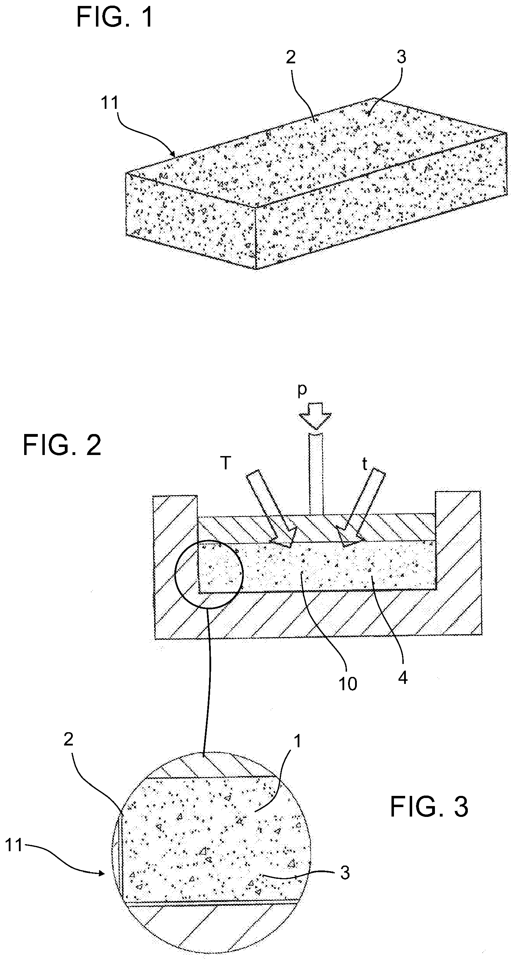

- Figure 1 shows a product, shaped merely by way of an example as a panel or plate and made with a production method according to the invention;
- Figure 2 shows a schematic view of the operating steps according to the method;
- Figure 3 shows a scaled-up view of a detail of Figure 2;

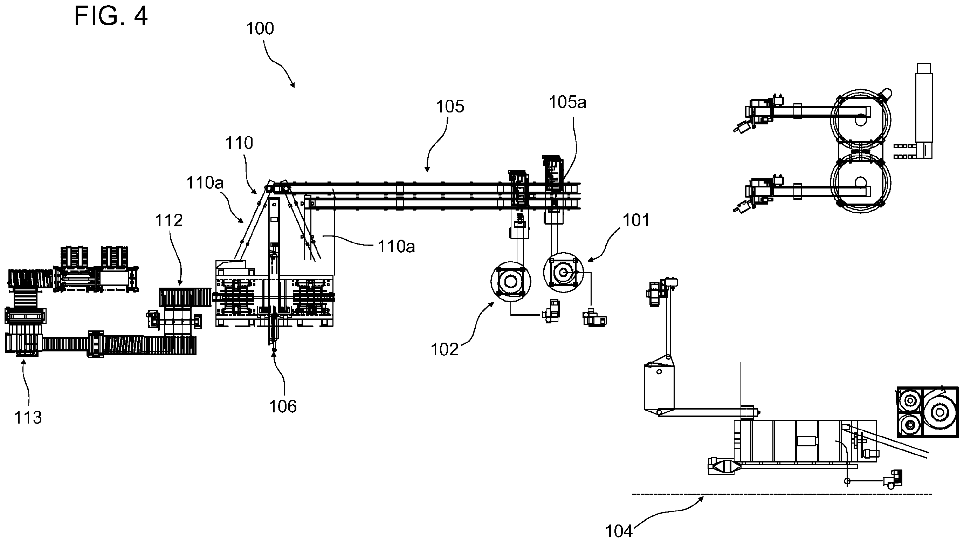

- Figure 4 shows the layout of the system for making a multi-purpose panel from composite material according to this invention;

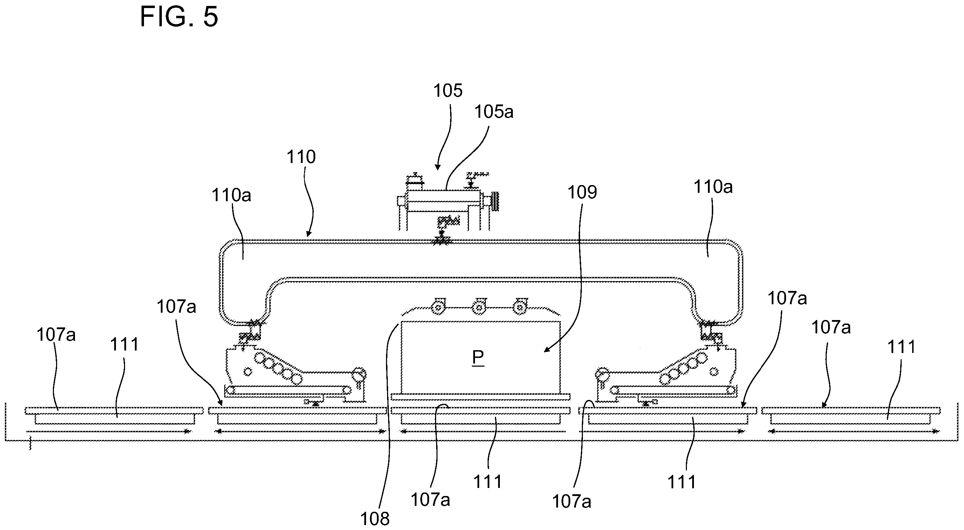

- Figure 5 shows a schematic front view of a detail of the system of Figure 4;

### Detailed description of preferred embodiments of the invention

With reference to the accompanying drawings, this invention relates to a method for preparing a composite multi-purpose panel 1 which can be used for general uses and, more specifically, for making furniture components.

The method basically comprises the steps of: mixing to the solid state at least two solid particulate materials (a first and a second material) 2 and 3. Preferably, at least the first material 2 includes a synthetic urea resin-based powder (preferably with a low formaldehyde content). In this embodiment, the resin powder consists of a resin in the powdery or granular state comprising a urea-formaldehyde base with additives, if necessary, of either a vinyl resin or a melamine resin, with a percentage of between 5 and 15% of the total, so as to make the compound mechanically more flexible.

Alternatively, the first material 2 comprises, for example, isocyanate and polyol.

After mixing the two particulate materials 2, 3 (that is, the mixture 10) they are introduced into a moulding cavity 4 and subjected to a mechanical compression action and a heating action for a predetermined time interval. Preferably, the mechanical compression is carried out with a pressure of between 400 and 800 MPa, even more preferably between 600 and 650 MPa.

Moreover, the heating is performed at a temperature of between 200 and 350°C, preferably between 250 and 300°C (in the example approximately 280°C).

Advantageously, in this way, there is a thermal-mechanical sintering between the first 2 and the second material 3 which makes the panel extremely strong.

In order to speed up the sintering, the method preferably comprises the use of catalysing means during the heating and/or the compression.

In a first embodiment, wherein the resin powder comprises a urea resin-based particulate material, the method comprises a step of drying the second material 3 such as to determine in the second material a humidity of between 8% and 18%, preferably between 8% and 15%.

Advantageously, during the sintering step, this humidity level acts as a means for catalysing the sintering between the first and the second material.

Alternatively, in the embodiment wherein the first material comprises isocyanate and polyol, the isocyanate acts as a binder resin for the second material 3 and the polyol acts as a catalyst for the sintering. Advantageously, by using the method described above, it is possible to obtain a very high quality multi-purpose panel in a very fast and inexpensive manner.

It should be noted that the compressing and heating actions continue for a time interval substantially between 30 and 60 minutes.

The method - which has been the subject of lengthy experimental research - surprisingly allows a monolithic gluing of the particulate substances positioned inside the moulding cavity to be obtained, by means of a sort of sintering of the particulate components present.

After sintering, the mixture 10 is cooled down to obtain a solid product wherein all the materials (first 2 and second 3) are aggregated monolithically together.

The experimental research has shown that there are many particulate materials (second materials 3) which can be combined monolithically with the resin with very satisfactory performance characteristics with regard to the structural strength of the products using the panel 1.

In effect, it is possible to combine the resin with solid materials (granular or ground), in both a simple form and with various combinations, which have an organic and inorganic origin.

For example, the materials which can be used may be:
- of a vegetal origin;
- textile fibres;
- wooden or fibrous fragments from the residue of industrial processing operations;
- materials which are a by-product of previous industrial processing operations;
- waste materials from industrial processing operations.

More specifically, amongst the solid materials of a vegetal origin, taken individually or mixed together, it is possible to use biomasses containing materials coming from:
- pruning of trees or shrubs;
- harvesting of stems of cereal or grass crops, such as, for example, wheat, barley, maize, rice etc.
- biomasses with a high fibre content such as broom plants, leaves of Indian figs, wild reeds, bamboo canes.

However, fibres of a vegetal origin can also be used which come from industrial processing waste, in particular the processing of sugar beet, sugar cane and the pressing of seeds for extracting oil.

With regard to the textile fibres, these can be either of an artificial nature, or of a natural origin, such as cotton, silk or wool. The possibility of their procurement from the specialised collection of clothing or rags and/or their collection from industrial textile waste also enables significant advantages in terms of possibility of recycling many materials which would otherwise be disposed of as waste.

The solid resin may also be advantageously mixed with wood or fibrous fragments coming from husks - for example from industrial food processing waste - such as shells of nuts, coconuts, pine nuts, peanuts. Solid substances can also be used which include fibrous fragments coming from the skin of fruits and vegetables, such as potatoes, tomatoes, bananas, pea pods, broad beans, chick peas, beans etc.

Further solid materials which can be used in combination with the resin comprise industrial waste materials, including hide and leather waste, expanded polyurethane waste, plastic material waste (ABS and PVC), waste from tyres, glass, aluminium and/or lightweight metals. What should be noted in particular from this last list is the positive possibility of recycling materials for which the disposal as waste is currently considered quite problematic for the environment, with reference in particular, for example, to ABS and PVC waste and also to the construction materials of components or parts of electronic devices which are no longer used or are technologically superseded, which make up, for example, printed circuits for phones and electronic systems in general.

The structural performance of the material 1 provided by the method described above is influenced, obviously, also by the dimensions of the solid particulate substances which are mixed, as well as by the moisture content which is quite high in some of them.

In this regard, the method preferably comprises a grinding and/or screening step wherein the particulate materials 3 are subjected to a dimensional control.

The grinding and/or screening step is performed upstream of the mixing so that during this step both the first 2 and the second material 3 have optimum dimensions to achieve a sintering.

In addition to the advantage of allowing the use of materials which are potentially harmful and/or polluting for the environment, the method also allows the product obtained to be given decorative external features which are particular and useful for certain specific uses, especially as a decorative element and/or as a furniture component.

The method may comprise, in effect, even a step of covering the moulding cavity 4 prior to the introduction into it of the mixture 10 in the solid state. The covering step may be implemented by placing on the inside wall 12 of the cavity 4 a film 8, consisting, for example, of a layer of paper, if necessary decorated with drawings, painted, printed or etched, or consisting for example of a thin plastic film. After the melting and the solidification of the resin, the film 8 is also anchored to the panel 11 thus becoming an integral part of it and allowing the panel 11 to be decorated in a wide range of ways and according to an equally wide range of appearances.

Another object of this invention is, as already mentioned, also a system 100 for making a multi-purpose panel from a composite material.

The system 100 comprises a first station 101 for storing the first particulate material 2 in the solid state (comprising a resin powder, preferably of the type described above) and a second station 102 for storing the second particulate material 3 in the solid state.

In the preferred embodiment, the system 100 is equipped, operatively upstream of the storage stations 101, 102, with at least one grinding and/or screening unit, provided with grinding means (not illustrated) configured to improve the grain size of the first 2 and/or the second 3 material before storage.

Moreover, in the embodiment illustrated, the system 100 also comprises a station 104 for drying the second material 3, also operatively located upstream of the storage station 102.

Preferably, the drying station 104 is operatively interposed between the grinding and/or screening unit and the station 102 for storing the second material 3.

Alternatively, it is possible to provide a refining unit operatively located downstream of the drying station 104.

Preferably, the drying station 104 is configured to determine, in the second material 3, a humidity of between 8% and 18%, preferably between the 8% and 15%.

Thus, the drying station 104 preferably comprises heating means (not illustrated) configured for raising the temperature in a drying zone, from the drying temperature (variable according to the material used), to 0°C. Downstream of the storage stations 101, 102, the system 100 comprises a station 105 for mixing the first 2 and the second material 3.

The mixing station 105 comprises a mixing tank 105a extending between a relative first end, associated with the storage stations 101, 102 by suitable transfer arms 101a, 102a and a relative second end 105b.

In other words, each transfer arm 101a, 102a extends away from the relative storage station 101, 102 and is configured for transferring the particulate material to the mixing tank 105a.

The mixing tank 105a is preferably equipped with feeding means configured to transport the material from the first to the second end, preferably with the aid of heating means which facilitate the mixing. Preferably, the heating means increase the temperature of the mixture 10 up to 0°C, more preferably 50°C.

Downstream of the mixing station 105, the system comprises a sintering station 106 configured for making the multi-purpose panel 11.

The sintering station 106 is associated with the mixing station 105 for receiving the mixture 10 in the incoherent state and is configured for processing it thermo-mechanically to make it monolithic.

More specifically, the sintering station 106 is equipped with:
- means 107 for containing a predetermined quantity of the mixture 10;
- heating means 108 configured to raise the temperature of the mixture 10;
- pressing means 109, located at a pressing zone "P", configured for exerting a mechanical pressure on the mixture 10.
The heating means are configured for raising the temperature of the pressing zone "P" in a range of between 200 and 350°C, preferably approximately 280°C.

Moreover, the pressing means 109 are configured for exerting a mechanical pressure on the mixture 10 of between 400 and 800 MPa, preferably approximately 650 MPa.

The containment means 107 are preferably defined by at least one tray 107a which can be positioned in the pressing zone "P".

Preferably, the tray 107a has a predetermined shape and is shaped for receiving the mixture 10 leaving the mixing station 105 and to act as a mould in the pressing zone "P".

In the preferred embodiment, the system 100 comprises a unit 110 for filling the containment means 107 operatively interposed between the mixing station 105 and the sintering station 106.

The filling unit 110 comprises at least one duct 110a through which the mixture 10 passes and leading to a carriage 111 movable between:
- a first position, for filling, wherein it faces the duct 110a for receiving the mixture;
- a second position, for moulding, wherein it is in the pressing zone "P";
- a third position, for unloading, away from the pressing zone "P" and close to an unloading station 112.

Thus, the carriage 111 is equipped with the tray 107a, which acts as a mould when the carriage 111 is in the second position.

In the preferred embodiment, the filling unit 110 comprises a plurality of carriages 111 positioned in series and movable cyclically between the first, the second and the third position so as to maximise the productivity of the system. Thus, the system 100 comprises movement means (not illustrated) associated with each carriage 111 for moving it between the three above-mentioned positions.

More preferably, the filling unit 110 comprises at least one pair of ducts 110a divergent from each other and extending between respective first ends, proximal to each other (and positioned at the mixing station 105), and respective second ends distal from each other and positioned on opposite sides of the pressing zone "P" of the sintering station 106.

The filling unit 110 comprises at least one carriage 111 located at the second end of each duct 110a in such a way as to alternately feed the pressing zone from one side or the opposite side, thus maximising the productivity of the system.

In this regard, the system 100 comprises a control unit (not illustrated) associated with the carriages 111 (that is, with the movement means, not illustrated) and configured for alternately positioning them in the second position in order to maximise the productivity of the system. Advantageously, in this way it is always possible to feed the pressing zone "P" with a tray 107a, that is with a carriage 111, from one side, whilst the tray 107a, that is the carriage 111, just processed is coming out from the pressing zone "P" from the other side.

Downstream of the sintering station there is also, as already mentioned, an unloading station 112 configured for receiving the panel 11 and transporting it away from the pressing zone "P" and, preferably, a cooling station 113 in which the panel 11 is kept for a predetermined period of time to reduce its temperature.

Preferably, the cooling station 113 is equipped with at least one rectilinear frame (not illustrated) provided with means for locking each panel 111 and configured to avoid curvature of the panel during cooling.

The invention achieves the set aims and brings important advantages.

In effect, the panel made in this way is, as already mentioned, of high quality and high strength, with the further advantage of being made in a short time and with limited costs (due also to the possibility of using a vast range of particulate materials, also mixed with each other).

Moreover, the system for implementing the method also has high performance levels as it is able to perform a sintering of the material (with high pressures and temperatures).

## Claims

1. A method for making a multi-purpose panel from composite material, comprising the steps of:
- preparing at least one first particulate material (2) in the solid state comprising a resin powder;
- preparing at least one second particulate material (3) in the solid state;
- mixing the at least one first (2) and at least one second material (3) to obtain a mixture (10);
- introducing the mixture (10) in the solid state in a moulding cavity (4);
- subjecting the mixture (10) to a mechanical compression action at a pressure of between 400 MPa and 800 MPa and to a heating action at a temperature of between 200°C and 350°C in such a way as to determine a thermal-mechanical sintering in said mixture (10);
- cooling the mixture (10) until obtaining a solid product (11) wherein the first (2) and second material (3) are aggregated monolithically together.

2. The method according to claim 1, **characterised in that** the resin powder comprises at least one urea resin-based particulate material; the method comprising a step of drying the second material (3) such as to determine in the second material a humidity of between 8% and 18%.

3. The method according to claim 2, **characterised in that** the drying step is performed before the mixing step in such a way that the humidity of between 8% and 18% acts as a catalyst for the sintering between the first (2) and the second material (3).

4. The method according to claim 2 or 3, **characterised in that** the urea resin has a vinyl resin or melamine resin additive so as to increase the flexibility of the panel (11).

5. The method according to claim 1, **characterised in that** the resin powder comprises a particulate substance containing isocyanate and polyol; the polyol forming a catalyst of the sintering between the first (2) and the second material (3).

6. The method according to any one of the preceding claims, **characterised in that** the second material (3) comprises particulate material of organic origin.

7. The method according to any one of the preceding claims, **characterised in that** the second material (3) comprises particulate material of inorganic origin.

8. The method according to any one of the preceding claims, **characterised in that** it comprises, before the mixing step, a step for grinding the second particulate material until obtaining a predetermined grain size of the first material (2).

9. A system for making a multi-purpose panel from composite material, comprising:
- a first station (101) for storing a first particulate material (2) in the solid state comprising a resin powder;
- a second station (102) for storing a second particulate material (3) in the solid state;
- a station (105) for mixing the first (2) and the second material (3) operatively positioned downstream of the first (101) and second storage station (102);
- a sintering station (106) operatively positioned downstream of the mixing station (105) and designed for making the multi-purpose panel; the sintering station (106) being equipped with:
- means (107) for containing a predetermined quantity of the mixture which can be positioned in at least one pressing zone (P);
- heating means (108) designed for raising the temperature of the pressing zone (P) in a range of between 200°C and 350 °C;
- pressing means (109) designed for exerting on the mixture a mechanical pressure of between 400 MPa and 800 MPa;
- an unloading station (112) operatively positioned downstream of the sintering station (106) and designed for receiving the panel (11) and transporting it away from the pressing zone;
- a cooling station (113) wherein the panel (11) is kept for a predetermined period of time to reduce the relative temperature.

10. The system according to claim 9, **characterised in that** it comprises a unit (110) for filling the containment means (107) operatively interposed between the mixing station (105) and the sintering station (106); the filling unit (110) comprising at least one duct (110a) through which the mixture (10) passes and leading to a carriage (111) movable between:
- a first position, for filling, wherein it faces the duct (110a) for receiving the mixture (10);
- a second position, for forming, wherein it is in the pressing zone (P);
- a third position, for unloading, away from the pressing zone (P) and close to the unloading station (112).

11. The system according to claim 9, **characterised in that** the filling unit (110) comprises a plurality of carriages (111) positioned in series and movable cyclically between the first, the second and the third position so as to maximise the productivity of the system.

12. The system according to claim 9 or 10, **characterised in that** the filling unit (110) comprises at least one pair of ducts (110a) divergent from each other and extending between respective first ends, proximal to each other, and respective second ends distal from each other and positioned on opposite sides of the pressing zone (P) of the sintering station (106); the filling unit (107) comprising at least one carriage (111) positioned at the second end of each duct (110a).

13. The system according to claim 12, **characterised in that** it comprises a control unit associated with the carriages (111) and configured for positioning them alternately in the second position so as to maximise the productivity of the system.

14. The system according to any one of claims 11 to 13, **characterised in that** each carriage (111) is equipped with a tray (107a) with a predetermined shape for receiving the mixture (10) coming out from the respective duct (110a) and designed to act as mould when the carriage (111) is in the second position.

## Patentansprüche

1. Verfahren zur Herstellung eines Mehrzweckpaneels aus Verbundwerkstoff, umfassend die folgenden Schritte:
- Vorbereiten von mindesten einem ersten Partikelmaterial (2) in festem Zustand, umfassend ein Harzpulver;
- Vorbereiten von mindesten einem zweiten Partikelmaterial (3) in festem Zustand;
- Vermischen des mindestens einen ersten (2) und des mindestens einen zweiten Materials (3), um ein Gemisch (10) zu erhalten;
- Einführen des Gemischs (10) in festem Zustand in einen Formungshohlraum (4);
- Unterziehen des Gemischs (10) einer mechanischen Kompressionswirkung bei einem Druck zwischen 400 MPa und 800 MPa und einer Erhitzungswirkung bei einer Temperatur zwischen 200 °C und 350 °C, sodass ein thermomechanisches Sintern im Gemisch (10) erzeugt wird;
- Abkühlen des Gemischs (10), bis ein festes Produkt (11) erhalten wird, wobei das erste (2) und das zweite Material (3) monolithisch miteinander aggregiert werden.

2. Verfahren nach Anspruch 1, **dadurch gekennzeichnet, dass** das Harzpulver mindestens ein harnstoffharzbasiertes Partikelmaterial umfasst, wobei das Verfahren einen Schritt zum Trocknen des zweiten Materials (3) umfasst, sodass im zweiten Material eine Feuchtigkeit zwischen 8 % und 18 % erzeugt wird.

3. Verfahren nach Anspruch 2, **dadurch gekennzeichnet, dass** der Schritt zum Trocknen vor dem Schritt zum Vermischen durchgeführt wird, sodass die Feuchtigkeit zwischen 8 % und 18 % als Katalysator für das Sintern zwischen dem ersten (2) und dem zweiten Material (3) wirkt.

4. Verfahren nach Anspruch 2 oder 3, **dadurch gekennzeichnet, dass** das Harnstoffharz einen Vinylharz- oder Melaminharzzusatz aufweist, sodass die Flexibilität des Paneels (11) erhöht wird.

5. Verfahren nach Anspruch 1, **dadurch gekennzeichnet, dass** das Harzpulver eine Partikelsubstanz umfasst, enthaltend Isocyanat und Polyol, wobei das Polyol einen Katalysator des Sinterns zwischen dem ersten (2) und dem zweiten Material (3) formt.

6. Verfahren nach einem der vorhergehenden Ansprüche, **dadurch gekennzeichnet, dass** das zweite Material (3) Partikelmaterial organischen Ursprungs umfasst.

7. Verfahren nach einem der vorhergehenden Ansprüche, **dadurch gekennzeichnet, dass** das zweite Material (3) Partikelmaterial anorganischen Ursprungs umfasst.

8. Verfahren nach einem der vorhergehenden Ansprüche, **dadurch gekennzeichnet, dass** es vor dem Schritt zum Vermischen einen Schritt zum Mahlen des zweiten Partikelmaterials umfasst, bis eine vorgegebene Korngröße des ersten Materials (2) erreicht wird.

9. System zur Herstellung eines Mehrzweckpaneels aus Verbundwerkstoff, umfassend:
- eine erste Station (101) zum Speichern eines ersten Partikelmaterials (2) in festem Zustand, umfassend ein Harzpulver;
- eine zweite Station (102) zum Speichern eines zweiten Partikelmaterials (3) in festem Zustand;
- eine Station (105) zum Vermischen des ersten (2) und des zweiten Materials (3), betriebswirksam positioniert nach der ersten (101) und der zweiten Speicherstation (102);
- eine Sinterstation (106), betriebswirksam positioniert nach der Mischstation (105) und ausgestaltet, um ein Mehrzweckpaneel herzustellen, wobei die Sinterstation (106) ausgestattet ist mit:
- Mitteln (107) zum Enthalten einer vorgegebenen Menge des Gemischs, die in mindestens einem Pressbereich (P) positioniert werden können;
- Heizmitteln (108), die ausgestaltet sind, um die Temperatur des Pressbereichs (P) in einem Bereich zwischen 200 °C und 350 °C zu erhöhen;
- Pressmitteln (109), die ausgestaltet sind, um auf das Gemisch einen mechanischen Druck zwischen 400 MPa und 800 MPa auszuüben;
- einer Entladestation (112), die betriebswirksam nach der Sinterstation (106) positioniert und ausgestaltet ist, um das Paneel (11) aufzunehmen und es aus dem Pressbereich abzutransportieren;
- einer Kühlstation (113), in der das Paneel (11) für einen vorgegebenen Zeitraum gehalten wird, um die relative Temperatur zu reduzieren.

10. System nach Anspruch 9, **dadurch gekennzeichnet, dass** es eine Einheit (110) zum Füllen der Enthaltemittel (107) umfasst, die betriebswirksam zwischen der Mischstation (105) und der Sinterstation (106) angeordnet ist, wobei die Füllstation (110) mindestens eine Leitung (110a) umfasst, durch die das Gemisch (10) strömt und die zu einem Wagen (111) führt, der bewegbar ist zwischen:
- einer ersten Position zum Füllen, wobei er der Leitung (110a) zugewandt ist, um das Gemisch (10) aufzunehmen;
- einer zweiten Position zum Formen, wobei er sich im Pressbereich (P) befindet;
- einer dritten Position zum Entladen, entfernt vom Pressbereich (P) und in der Nähe der Entladestation (112).

11. System nach Anspruch 9, **dadurch gekennzeichnet, dass** die Fülleinheit (110) eine Vielzahl an Wagen (111) umfasst, die in Reihe positioniert und zyklisch zwischen der ersten, zweiten und dritten Position bewegbar sind, um die Produktivität des Systems zu maximieren.

12. System nach Anspruch 9 oder 10, **dadurch gekennzeichnet, dass** die Fülleinheit (110) mindestens ein Paar Leitungen (110a) umfasst, die auseinandergehend voneinander angeordnet sind und sich zwischen jeweiligen ersten Enden, die proximal zueinander angeordnet sind, und jeweiligen zweiten Enden, die distal voneinander angeordnet und an entgegengesetzten Seiten des Pressbereichs (P) der Sinterstation (106) positioniert sind, erstrecken, wobei die Füllstation (107) mindestens einen Wagen (111) umfasst, der am zweiten Ende einer jeden Leitung (110a) positioniert ist.

13. System nach Anspruch 12, **dadurch gekennzeichnet, dass** es eine Steuereinheit umfasst, assoziiert mit den Wagen (111) und ausgelegt, um diese wechselweise in der zweiten Position zu positionieren, sodass die Produktivität des Systems maximiert wird.

14. System nach einem der Ansprüche 11 bis 13, **dadurch gekennzeichnet, dass** ein jeder Wagen (111) mit einer Ablage (107a) mit einer vorgegebenen Form versehen ist, um das Gemisch (10) aufzunehmen, das aus der jeweiligen Leitung (110a) ausströmt, und ausgestaltet, um als Form zu wirken, wenn sich der Wagen (111) in der zweiten Position befindet.

## Revendications

1. Procédé de fabrication d'un panneau multifonctionnel en matériau composite, comprenant les étapes de :
- préparer au moins un premier matériau particulaire (2) à l'état solide comprenant une poudre de résine ;
- préparer au moins un second matériau particulaire (3) à l'état solide ;
- mélanger l'au moins un premier (2) et l'au moins un second matériau (3) pour obtenir un mélange (10) ;
- introduire le mélange (10) à l'état solide dans une cavité de moulage (4) ;
- soumettre le mélange (10) à une action de compression mécanique à une pression comprise entre 400 et 800 MPa et à une action de chauffage à une température comprise entre 200 et 350 °C de manière à déterminer un frittage thermique et mécanique dans ledit mélange (10) ;
- refroidir le mélange (10) jusqu'à obtenir un produit solide (11) dans lequel le premier (2) et le second matériau (3) sont agrégés monolithiquement ensemble.

2. Procédé selon la revendication 1, **caractérisé en ce que** la poudre de résine comprend au moins un matériau particulaire à base de résine d'urée ; le procédé comprenant une étape consistant à sécher le second matériau (3) de manière à déterminer une humidité comprise entre 8 et 18 % dans le second matériau.

3. Procédé selon la revendication 2, **caractérisé en ce que** l'étape de séchage est réalisée avant l'étape de mélange de manière à ce que l'humidité comprise entre 8 et 18 % agisse comme un catalyseur pour le frittage entre le premier (2) et le second matériau (3).

4. Procédé selon la revendication 2 ou 3, **caractérisé en ce que** la résine d'urée comporte un additif de résine vinylique ou de résine de mélamine de sorte à augmenter la flexibilité du panneau (11).

5. Procédé selon la revendication 1, **caractérisé en ce que** la poudre de résine comprend une substance particulaire contenant de l'isocyanate et du polyol ; le polyol formant un catalyseur du frittage entre le premier (2) et le second matériau (3).

6. Procédé selon l'une quelconque des revendications précédentes, **caractérisé en ce que** le second matériau (3) comprend un matériau particulaire d'origine organique.

7. Procédé selon l'une quelconque des revendications précédentes, **caractérisé en ce que** le second matériau (3) comprend un matériau particulaire d'origine inorganique.

8. Procédé selon l'une quelconque des revendications précédentes, **caractérisé en ce qu'**il comprend, avant l'étape de mélange, une étape consistant à broyer le second matériau particulaire jusqu'à obtenir une grosseur du grain prédéterminée du premier matériau (2).

9. Système de fabrication d'un panneau multifonctionnel en matériau composite, comprenant :
- un premier poste (101) servant à stocker un premier matériau particulaire (2) à l'état solide comprenant une poudre de résine ;
- un second poste (102) servant à stocker un second matériau particulaire (3) à l'état solide ;
- un poste (105), servant à mélanger le premier (2) et le second matériau (3), positionné fonctionnellement en aval du premier (101) et du second poste de stockage (102) ;
- un poste de frittage (106) positionné fonctionnellement en aval du poste de mélange (105) et conçu pour fabriquer le panneau multifonctionnel ; le poste de frittage (106) étant équipé de :
- moyens (107) servant à contenir une quantité prédéterminée de mélange pouvant être positionnée dans au moins une zone de pressage (P) ;
- moyens de chauffage (108) conçus pour élever la température de la zone de pressage (P) entre 200 et 350 °C ;
- des moyens de pressage (109) conçus pour exercer sur le mélange une pression mécanique comprise entre 400 et 800 MPa ;
- un poste de déchargement (112) positionné fonctionnellement en aval du poste de frittage (106) et conçu pour recevoir le panneau (11) et l'éloigner de la zone de pressage ;
- un poste de refroidissement (113) dans lequel le panneau (11) est laissé pendant une période de temps prédéterminée afin de réduire la température relative.

10. Système selon la revendication 9, **caractérisé en ce qu'**il comprend une unité (110) servant à remplir les moyens de contenance (107) interposée fonctionnellement entre le poste de mélange (105) et le poste de frittage (106) ; l'unité de remplissage (110) comprenant au moins un conduit (110a), à travers lequel le mélange (10) passe, et conduisant à un chariot (111) mobile entre :
- une première position de remplissage dans laquelle il fait face au conduit (110a) pour recevoir le mélange (10) ;
- une seconde position de formation dans laquelle il se trouve dans la zone de pressage (P) ;
- une troisième position de déchargement éloignée de la zone de pressage (P) et proche du poste de déchargement (112).

11. Système selon la revendication 9, **caractérisé en ce que** l'unité de remplissage (110) comprend une pluralité de chariots (111) positionnés en série et mobiles cycliquement entre la première, la seconde et la troisième position de sorte à maximiser la productivité du système.

12. Système selon la revendication 9 ou 10, **caractérisé en ce que** l'unité de remplissage (110) comprend au moins une paire de conduits (110a) qui divergent l'un de l'autre et se prolongeant entre des premières extrémités respectives, proximales l'une de l'autre, et des secondes extrémités respectives distales l'une de l'autre et positionnées sur des côtés opposés de la zone de pressage (P) du poste de frittage (106) ; l'unité de remplissage (107) comprenant au moins un chariot (111) positionné en correspondance de la seconde extrémité de chaque conduit (110a).

13. Système selon la revendication 12, **caractérisé en ce qu'**il comprend une unité de commande associée aux chariots (111) et configurée pour les positionner alternativement dans la seconde position de manière à maximiser la productivité du système.

14. Système selon l'une quelconque des revendications de 11 à 13, **caractérisé en ce que** chaque chariot (111) est équipé d'un plateau (107a) ayant une forme prédéfinie pour recevoir le mélange (10) sortant du conduit respectif (110a) et conçu pour agir comme un moule lorsque le chariot (111) se trouve dans la seconde position.
